# EUROPEAN PATENT APPLICATION

(11) **EP 4 760 919 A1**
(43) Date of publication of application: **17.06.2026**
(21) Application number: 24886357.3
(22) Date of filing: 01.11.2024
(51) Int. Cl.: H01M 50/242, H01M 50/227, H01M 50/224, H01M 50/289

(54) **BATTERY PACK**

(30) Priority: 01.11.2023 KR 20230149488; 23.02.2024 KR 20240026582
(71) Applicant: LG Energy Solution, Ltd., Seoul 07335 (KR)
(72) Inventor: JEON, Byeong Jun, Daejeon 34122 (KR); AN, Ji Myong, Daejeon 34122 (KR); KEUM, Jong Yoon, Daejeon 34122 (KR)
(74) Representative: Plasseraud IP
(86) International application number: PCT/KR2024/017057
(87) International publication number: WO 2025/095686

(57) **Abstract**

The present disclosure relates to a battery pack including a plurality of battery cells that can be charged and discharged. A battery pack according to an embodiment of the present disclosure may include a plurality of battery cells, a case forming an internal space in which the plurality of battery cells are accommodated, and a reinforcing member interposed between inner walls of the case to prevent deformation of the case, wherein the reinforcing member may include a first reinforcing member contacting one inner wall of the case, a second reinforcing member contacting the other inner wall of the case, and a third reinforcing member formed thicker than the first and second reinforcing members and connecting the first and second reinforcing members between the first and second reinforcing members. At this time, the third reinforcing member may have a rod shape extending in a length direction of the battery cell, and the third reinforcing member may include a through hole formed along a direction in which the third reinforcing member extends.

## Description

### TECHNICAL FIELD

### CROSS-REFERENCE TO RELATED APPLICATIONS

The present application claims priority to Korean Patent Application No. 10-2023-0149488 filed on November 1, 2023 and Korean Patent Application No. 10-2024-0026582 filed on February 23, 2024 in the Republic of Korea, the disclosures of which are incorporated herein by reference.

### TECHNICAL FIELD

The present disclosure relates to a battery pack including a plurality of battery cells that can be charged and discharged.

### BACKGROUND ART

A secondary battery (rechargeable battery) is a battery that can be charged and discharged, unlike a primary battery that cannot be recharged. A small secondary battery is used in portable electronic devices such as mobile phones, laptop computers and camcorders, while a medium or large secondary battery is widely used as a power source for driving motors in hybrid vehicles or the like.

The secondary battery may be used in the form of a battery cell. The battery cell may have a structure in which a positive electrode, a separator, and a negative electrode are sequentially stacked inside an outer material, and the inner space of the outer material is filled with an electrolyte solution. A plurality of battery cells may be electrically connected to form a battery module or a battery pack.

The battery pack has a structure in which a plurality of battery cells are accommodated inside a case. At this time, the inside of the case is formed with an empty space to accommodate the plurality of battery cells, and the thickness of the case is formed thin to improve the energy density of the battery pack.

In this case, there was a problem of the case of the battery pack being easily crushed or broken by an external impact. Additionally, the external impact applied to the case breaks the case and is transmitted to battery cells inside the case, so that there is a problem that the battery cells accommodated in the internal space are damaged.

### SUMMARY

### TECHNICAL PROBLEM

The present disclosure is designed to solve the problems of the related art, and therefore the present disclosure is directed to providing a battery pack capable of preventing a case from being damaged or deformed by an external impact or the like.

### TECHNICAL SOLUTION

A battery pack according to the present disclosure may include a plurality of battery cells; a case forming an internal space in which the plurality of battery cells are accommodated; and a reinforcing member interposed between inner walls of the case to prevent deformation of the case, wherein the reinforcing member may include a first reinforcing member contacting one inner wall of the case; a second reinforcing member contacting the other inner wall of the case; and a third reinforcing member formed thicker than the first and second reinforcing members and connecting the first and second reinforcing members between the first and second reinforcing members, wherein the third reinforcing member may have a rod shape extending in a length direction of the battery cell, and the third reinforcing member may include a through hole formed along a direction in which the third reinforcing member extends.

A pair of openings facing the through hole may be formed in the case.

The first reinforcing member may be a plate-shaped member provided between the third reinforcing member and one inner wall of the case in a width direction, and the second reinforcing member may be a plate-shaped member provided between the third reinforcing member and the other inner wall of the case in a width direction.

A thickness of the third reinforcing member may be 4 to 5 mm, and thicknesses of the first and second reinforcing members may be 2.5 to 3.5 mm.

A diameter length of the through hole may be the same as a diameter length of the opening.

A screw thread may be formed on the inner surface of the through hole.

The case may be made of a plastic material.

The first to third reinforcing members may be made of a metal material.

The first to third reinforcing members may be made of a plastic material.

The first and second reinforcing members may be fused to the case.

Meanwhile, a battery pack according to the present disclosure may include a plurality of battery cells; a case forming an internal space in which the plurality of battery cells are accommodated; a reinforcing member interposed between inner walls of the case to prevent deformation of the case; and a cell fixing housing installed in the internal space and fixing the plurality of battery cells, wherein the reinforcing member may include a first reinforcing member contacting one inner wall of the case; a second reinforcing member contacting the other inner wall of the case; and a third reinforcing member formed thicker than the first and second reinforcing members and connecting the first and second reinforcing members between the first and second reinforcing members.

A cell seating hole in which the battery cell is seated may be formed in the cell fixing housing.

The reinforcing member may be interposed between inner walls of the case in a state of being inserted into the cell fixing housing.

Meanwhile, in a battery pack according to the present disclosure, a plurality of the reinforcing members may be interposed between inner walls of the case.

### ADVANTAGEOUS EFFECTS

A battery pack according to an embodiment of the present disclosure includes a plurality of battery cells, a case forming an internal space in which the plurality of battery cells are accommodated, and a reinforcing member interposed between inner walls of the case to prevent deformation of the case, wherein the reinforcing member includes a first reinforcing member contacting one inner wall of the case, a second reinforcing member contacting the other inner wall of the case, and a third reinforcing member formed thicker than the first and second reinforcing members and connecting the first and second reinforcing members between the first and second reinforcing members, so that there is an advantageous effect of preventing the case from being deformed and damaged by an external impact.

### BRIEF DESCRIPTION OF THE DRAWINGS

FIG. 1 is a perspective view of a battery pack according to Embodiment 1 of the present disclosure.
FIG. 2 is a view showing internal configurations of a battery pack according to Embodiment 1 of the present disclosure.
FIG. 3 is a cross-sectional view of a battery pack according to Embodiment 1 of the present disclosure.
FIG. 4 is a view showing a state in which a fixing pin is inserted into a reinforcing member in a battery pack according to Embodiment 1 of the present disclosure.
FIG. 5 is a view showing a state in which a reinforcing member is inserted into a cell fixing housing in a battery pack according to Embodiment 1 of the present disclosure.
FIG. 6 is a view showing a state in which a battery cell and a reinforcing member are inserted into a cell fixing housing in a battery pack according to Embodiment 1 of the present disclosure.
FIG. 7 is a view showing a state in which a pressing member presses a battery pack according to Embodiment 1 of the present disclosure.
FIG. 8 is a graph showing the degree of deformation of a battery pack according to the pressurization of FIG. 7.
FIG. 9 is a view showing a state in which a pressing member presses a battery pack according to a comparative example of the present disclosure.
FIG. 10 is a graph showing the degree of deformation of a battery pack according to the pressurization of FIG. 9.
FIG. 11 is a cross-sectional view showing a state in which a fixing screw is inserted into a reinforcing member in a battery pack according to Embodiment 1 of the present disclosure.
FIG. 12 is a view showing internal configurations of a battery pack according to Embodiment 2 of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a battery pack according to the present disclosure will be described with reference to the drawings.

### Embodiment 1

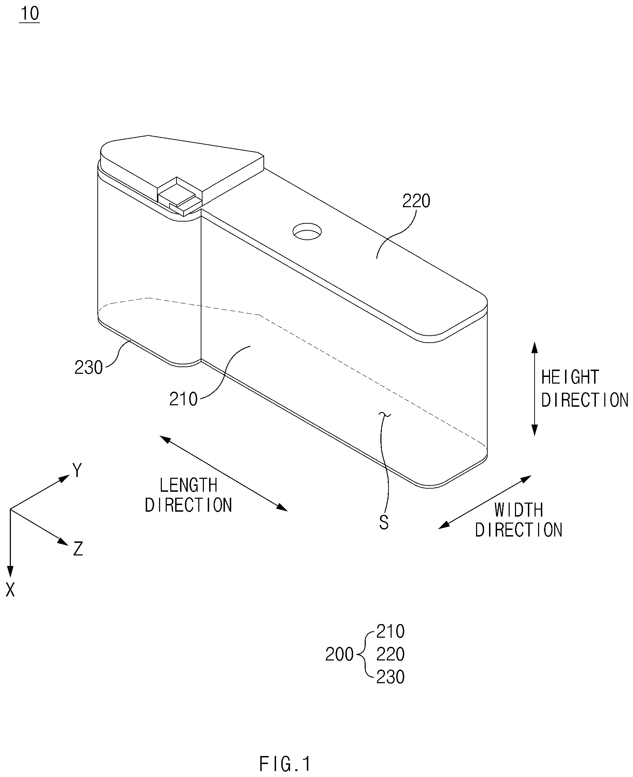

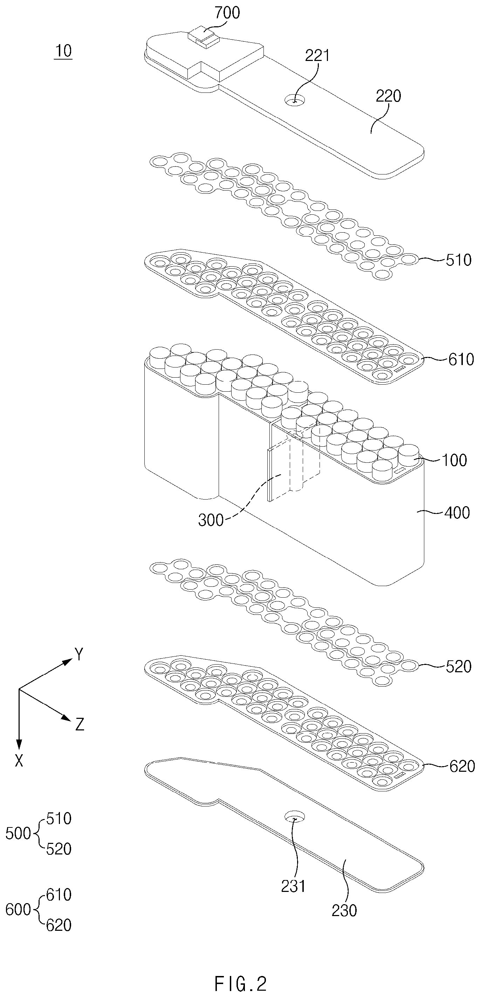

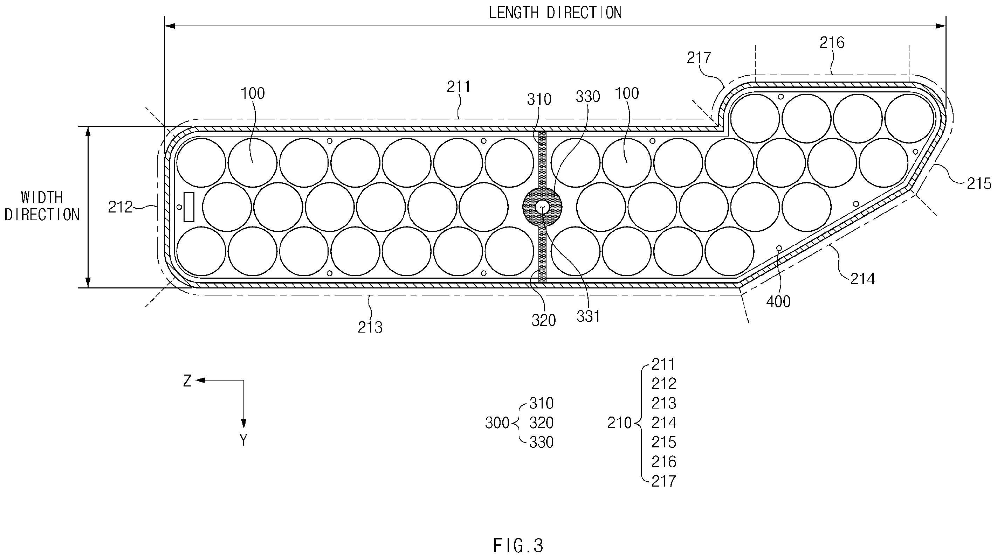

FIG. 1 is a perspective view of a battery pack 10 according to Embodiment 1 of the present disclosure, and FIG. 2 is a view showing internal configurations of a battery pack 10 according to Embodiment 1 of the present disclosure. FIG. 3 is a cross-sectional view of a battery pack 10 according to Embodiment 1 of the present disclosure.

As shown in FIGS. 1 to 3, a battery pack 10 according to Embodiment 1 of the present disclosure may include a plurality of battery cells 100, a case 200 forming an internal space S in which the plurality of battery cells 100 are accommodated, and a reinforcing member 300 interposed between inner walls of the case 200 to prevent deformation of the case 200. Here, the reinforcing member 300 may include a first reinforcing member 310 contacting one inner wall of the case 200, a second reinforcing member 320 contacting the other inner wall of the case 200, and a third reinforcing member 330 formed thicker than the first and second reinforcing members 310, 320 and connecting the first and second reinforcing members 310, 320 between the first and second reinforcing members 310, 320.

At this time, even when an external impact is applied to the case 200, a substantial portion of the external impact transmitted to the reinforcing member 300 through the case 200 may be absorbed by the third reinforcing member 330. Therefore, it is possible to prevent the first and second reinforcing members 310, 320 having a relatively thin thickness from being bent to one side or broken even with a strong external impact. That is, the reinforcing member 300 having the above structure may withstand a strong external impact and continuously support the case 200, thereby effectively preventing the case 200 from being deformed and damaged by the external impact.

The battery cell 100 is a secondary battery that can be charged and discharged, and may have a structure in which an electrode assembly where a positive electrode and a negative electrode are alternately stacked with a separator interposed therebetween is accommodated inside an exterior material. Here, the electrode assembly may be a jelly-roll type electrode assembly in which a positive electrode, a negative electrode, and a separator are stacked and then wound in one direction.

The positive electrode includes a positive electrode current collector and a positive electrode active material coated on the positive electrode current collector, and a positive electrode uncoated portion of the positive electrode current collector that is not coated with the positive electrode active material may be a positive electrode tab. At this time, the positive electrode tab may be electrically connected to a positive electrode lead.

The negative electrode includes a negative electrode current collector and a negative electrode active material coated on the negative electrode current collector, and a negative electrode uncoated portion of the negative electrode current collector that is not coated with the negative electrode active material may be a negative electrode tab. At this time, the negative electrode tab may be electrically connected to a negative electrode lead.

The separator is a membrane interposed between the positive electrode and the negative electrode to block contact between the positive electrode and the negative electrode, and may be made of an insulating material. At this time, the separator may have a plurality of pores through which positive ions such as lithium pass.

The exterior material is a case surrounding the electrode assembly, and may be configured in various ways. For example, the exterior material is a metal can made of a metal such as aluminum or iron, and may form a receiving space in which the electrode assembly is accommodated.

Meanwhile, the case 200 forms an empty internal space S in which a plurality of battery cells 100 are accommodated, and may be composed of a plurality of members. For example, the case 200 may include an upper plate 220, a lower plate 230, and a connection plate 210 connecting the upper plate 220 and the lower plate 230 between the upper plate 220 and the lower plate 230.

Here, the upper plate 220 and the lower plate 230 may have the same horizontal direction (ZY direction) cross-section, and the connection plate 210 may connect the edge portions of the upper plate 220 and the lower plate 230. At this time, the connection plate 210 may have various shapes. The connection plate 210 may be composed of first to seventh parts 211, 212, 213, 214, 215, 216, 217, as shown in FIG. 3, to form an internal space S having seven corners.

Meanwhile, the connection portions where the first to seventh parts 211, 212, 213, 214, 215, 216, 217 are connected may be processed in a streamlined shape. In this case, the connection plate 210 may not have an angled corner portion.

The reinforcing member 300 is interposed between inner walls of the case 200 to provide an outward supporting force to the case 200, which may prevent the case 200 from being broken or deformed by an external impact. The reinforcing member 300 may be installed at various locations in the internal space S of the case 200. For example, as shown in FIG. 3, the reinforcing member 300 may be interposed between the first part 211 and the third part 213 constituting the connection plate 210.

The reinforcing member 300 may include a first reinforcing member 310 contacting one inner wall of the case 200; a second reinforcing member 320 contacting the other inner wall of the case 200; and a third reinforcing member 330 connecting the first and second reinforcing members 310, 320 between the first and second reinforcing members 310, 320. Here, the third reinforcing member 330 may be formed thicker than the first and second reinforcing members 310, 320.

At this time, even when an external impact is applied to the case 200, a substantial portion of the external impact transmitted to the reinforcing member 300 through the case 200 may be absorbed by the third reinforcing member 330. Therefore, it is possible to prevent the first and second reinforcing members 310, 320 having a relatively thin thickness from being bent to one side or broken even with a strong external impact. That is, the reinforcing member 300 having the above structure may withstand a strong external impact and continuously support the case 200, thereby effectively preventing the case 200 from being deformed and damaged by the external impact.

The first to third reinforcing members 310, 320, 330 may be provided at various locations in the internal space S. For example, the third reinforcing member 330 may be provided at the center of the internal space S, and the first reinforcing member 310 may be provided between the center of the internal space S and one inner wall of the case 200 in a width direction. Additionally, the second reinforcing member 320 may be provided between the center of the internal space S and the other inner wall of the case 200.

Meanwhile, the third reinforcing member 330 may have a rod shape extending long along a length direction of the battery cell 100. For example, the third reinforcing member 330 may have a cylindrical rod shape extending in a length direction of the battery cell 100. When the third reinforcing member 330 has a cylindrical rod shape, angled corner portions are not formed in the third reinforcing member 330, and thus a plurality of battery cells 100 disposed around the third reinforcing member 330 may be prevented from being damaged by contact with the corner portions.

Here, a through hole 331 penetrating the third reinforcing member 330 along a direction in which the third reinforcing member 330 extends may be formed in the third reinforcing member 330. Specifically, the through hole 331 may be formed to be long along a central axis of the third reinforcing member 330 having a cylindrical rod shape.

The first reinforcing member 310 and the second reinforcing member 320 are formed on both sides of the third reinforcing member 330, respectively, and may have various shapes. For example, the first reinforcing member 310 may be a plate-shaped member provided between the third reinforcing member 330 and one inner wall of the case 200 in a width direction. Additionally, the second reinforcing member 320 may be a plate-shaped member provided between the third reinforcing member 330 and the other inner wall of the case 200 in a width direction.

Meanwhile, a pair of openings 221, 231 facing the through hole 331 may be formed in the case 200. Specifically, an upper opening 221 facing the through hole 331 may be formed in the upper plate 220 of the case 200, and a lower opening 231 facing the through hole 331 may be formed in the lower plate 230 of the case 200.

Here, the upper opening 221, the through hole 331, and the lower opening 231 have the same central axis, so that the upper plate 220, the reinforcing member 300, and the lower plate 230 may be penetrated by a fixing member that fixes the battery pack 10 to a device such as an E-bike. In this case, the battery pack 10 may be fixed to the device with only one fixing member, and thus there is an advantageous effect of facilitating fixing the battery pack 10 to the device.

As the fixing member, a fixing pin 900 or a fixing screw 910 to be described later may be used. Since most of the volume of the fixing pin 900 or the fixing screw 910 is inserted into the through hole 331 described above, installing the battery pack 10 inside a device such as an E-bike may be space-intensive.

Meanwhile, the battery pack 10 according to Embodiment 1 of the present disclosure may include a cell fixing housing 400 installed in the internal space S and fixing the plurality of battery cells 100. The positions of the plurality of battery cells 100 are fixed by the cell fixing housing 400, and thus, even when an external impact is applied to the case 200, the plurality of battery cells 100 may be prevented from moving in the internal space S.

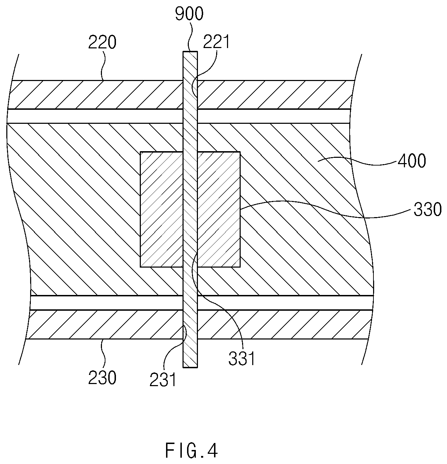

Meanwhile, FIG. 4 is a cross-sectional view showing a state in which a fixing pin 900 is inserted into a reinforcing member 300. As shown in FIG. 4, a vertical through hole 331 is formed in the third reinforcing member 330 constituting the reinforcing member 300, and a vertical housing through hole may be formed in the cell fixing housing 400. Here, the housing through hole formed in the cell fixing housing 400 may face the through hole 331 of the third reinforcing member 330. Additionally, openings 221, 231 facing the through hole 331 of the third reinforcing member 330 may be formed in each of the upper plate 220 and the lower plate 230.

Here, a diameter length of the through hole 331 may be the same as diameter lengths of the housing through hole and the openings 221, 231. In this case, the fixing pin 900 penetrating the lower plate 230, the reinforcing member 300, the cell fixing housing 400, and the upper plate 220 may be fitted into the lower plate 230, the reinforcing member 300, the cell fixing housing 400, and the upper plate 220. Here, the fixing screw 910 may be used as a fixing member for fixing the battery pack 10 to a device such as an E-bike, and thus there is an advantageous effect of firmly fixing the battery pack 10 to the device.

The battery pack 10 according to Embodiment 1 of the present disclosure may include a busbar 500. The busbar 500 is a member that is made of a highly electrically conductive metal such as copper or aluminum and transmits current between a plurality of battery cells 100, and the plurality of battery cells 100 installed in the internal space S may be welded to the busbar 500.

The busbar 500 may include a first busbar 510 provided adjacent to the upper plate 220 and a second busbar 520 provided adjacent to the lower plate 230. Here, the first busbar 510 may be connected to an electrode tab protruding upward from the battery cell 100, and the second busbar 520 may be connected to an electrode tab protruding downward from the battery cell 100.

The battery pack 10 according to Embodiment 1 of the present disclosure may include a cell frame 600 that binds together a plurality of battery cells 100 installed in the internal space S. The cell frame 600 binds a plurality of battery cells 100 together and protects the battery cells 100 from external impacts such as vibrations, and may be made of various materials. For example, the cell frame 600 may be made of an insulator such as plastic. Additionally, the cell frame 600 may have a structure in which an insulating layer is formed on the surface of a metal substrate such as aluminum.

The battery pack 10 according to Embodiment 1 of the present disclosure may include a connector insertion portion 700. The connector insertion portion 700 is a portion into which an external connector such as a charging connector is inserted, and may be formed at various locations of the battery pack 10. For example, the connector insertion portion 700 may be formed on one side of the upper plate 220 constituting the case 200 of the battery pack 10.

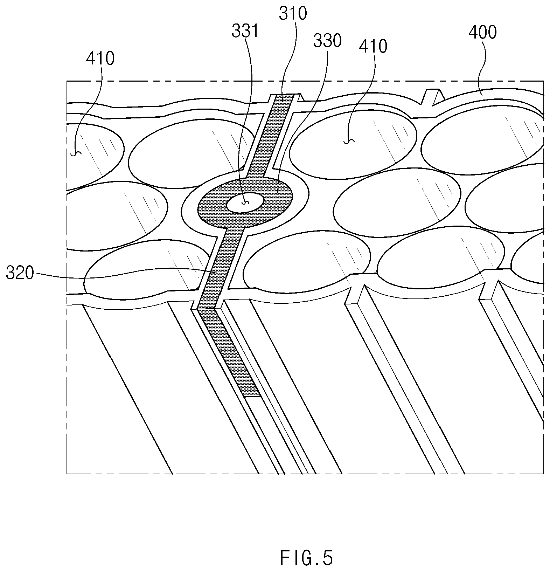

Meanwhile, FIG. 5 is a view showing a state in which a reinforcing member 300 is inserted into a cell fixing housing 400. In FIG. 5, a transverse cross-section of the cell fixing housing 400 and the reinforcing member 300 is shown. Referring to FIG. 5, the reinforcing member 300 composed of the first to third reinforcing members 310, 320, 330 may be inserted into the cell fixing housing 400. In this case, the reinforcing member 300 may be interposed between inner walls of the case 200 in a state of being inserted into the cell fixing housing 400.

Additionally, the cell fixing housing 400 may be formed with a plurality of cell seating holes 410 in which the battery cells 100 are each seated. Here, the cell seating holes 410 may have a shape corresponding to the inserted battery cells 100. For example, when the battery cell 100 is a cylindrical cell, the cell fixing housing 400 may be formed with a plurality of cylindrical cell seating holes 410.

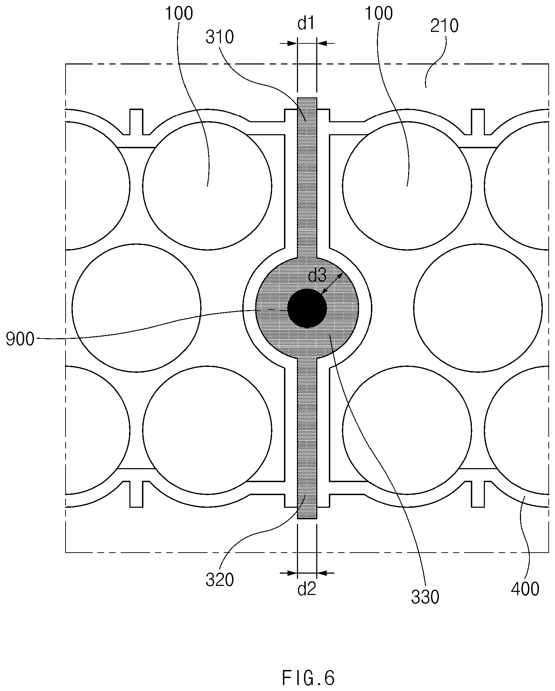

Meanwhile, FIG. 6 is a view showing a state in which a battery cell 100 and a reinforcing member 300 are inserted into a cell fixing housing 400. As shown in FIG. 6, the reinforcing member 300 composed of the first to third reinforcing members 310, 320, 330 and a plurality of battery cells 100 may be inserted into the cell fixing housing 400. At this time, the fixing pin 900 described above may be inserted into the third reinforcing member 330.

The third reinforcing member 300 may be fully inserted into the cell fixing housing 400, and portions of the first and second reinforcing members 310, 320 may partially protrude from one side and the other side of the cell fixing housing 400. Here, the protruding portions of the first and second reinforcing members 310, 320 may be sandwiched between inner walls of the case 200.

The first reinforcing member 310 and the second reinforcing member 320 inserted into the cell fixing housing 400 may have various thicknesses. For example, a thickness d₁ of the first reinforcing member 310 may be 2.5 to 3.5 mm. Additionally, a thickness d₂ of the second reinforcing member 320 may be 2.5 to 3.5 mm.

The third reinforcing member 330 may also have various thicknesses. The third reinforcing member 330 has a cylindrical shape that extends long along a length direction of the battery cell 100 inside the case 200, and a thickness d₃ of the third reinforcing member 330 may be 4 to 5 mm. Specifically, the thickness d₃ of the third reinforcing member 330 is the same as a distance between the through hole 331 formed in the third reinforcing member 330 and an outer surface of the third reinforcing member 330, which may be 4 to 5 mm.

Meanwhile, the case 200 may be made of various materials. For example, the case 200 may be made of a metal material such as aluminum or an aluminum alloy. In this case, the case 200 is made of a metal material having high rigidity, and thus, even when a strong external force is applied to the case 200, the case 200 may be prevented from being broken.

Additionally, the case 200 may be made of a plastic material. At this time, a reinforcing member 300 may be interposed in the internal space S of the case 200. In this case, the case 200 is made of a light plastic material, which may reduce the overall weight of the battery pack 10 and increase the energy density of the battery pack 10. In particular, a reinforcing member 300 is interposed inside the case 200, which may prevent the case 200 from being easily broken by an external force even though the case 200 is made of a plastic material.

Meanwhile, the reinforcing member 300 may be made of a metal material having high rigidity. For example, the first to third reinforcing members 310, 320, 330 constituting the reinforcing member 300 may be made of a metal material such as aluminum, an aluminum alloy, or stainless steel. In this case, the reinforcing member 300 has high rigidity, which may prevent the reinforcing member 300 from being broken even when a large force is instantaneously applied to the reinforcing member 300.

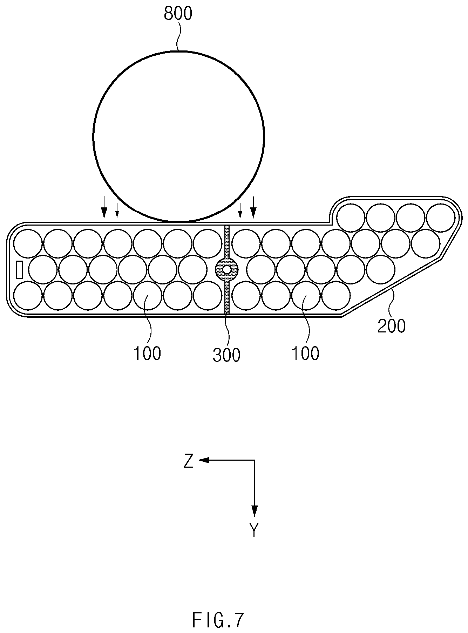

Meanwhile, FIG. 7 is a view showing a state in which a pressing member 800 presses a battery pack 10 according to Embodiment 1 of the present disclosure. Specifically, FIG. 7 shows a state in which a pressing member 800 configured as a rigid body presses a case 200 of a battery pack 10. Here, a plurality of battery cells 100 are accommodated in the internal space S of the case 200, and the reinforcing member 300 that supports the case 200 outwardly is interposed in the internal space S. Additionally, the reinforcing member 300 is made of aluminum or an aluminum alloy material, and the case 200 is made of a plastic material. A through hole is formed in a thick portion at the center of the reinforcing member 300.

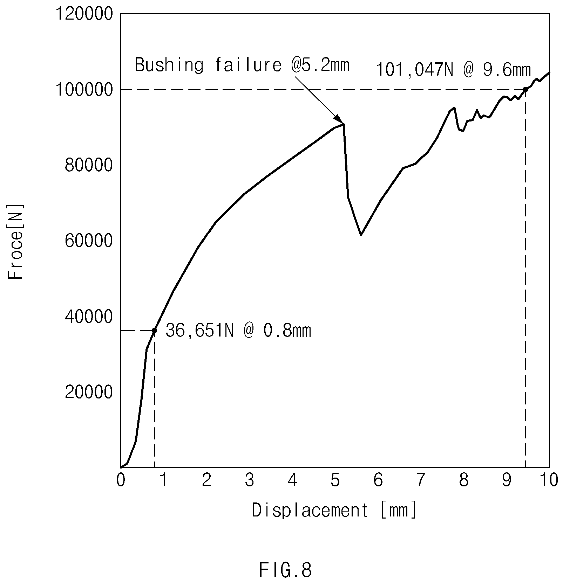

FIG. 8 is a graph showing the degree of deformation of a battery pack 10 according to the pressurization of FIG. 7. The X-axis of FIG. 8 represents the degree of deformation of the case 200 of the battery pack 10, and the Y-axis of FIG. 8 represents the magnitude of pressure applied by the pressing member 800 to the case 200 of the battery pack 10.

As a result of pressing the case 200 in which the reinforcing member 300 is installed with the pressing member 800 configured as a rigid body, it can be seen that the degree of deformation of the case 200 increases as the pressure applied by the pressing member 800 to the case 200 increases. Specifically, when the pressing member 800 applied a pressure of 36,651 N to the case 200 in the Y-axis direction, the pressed portion of the case 200 was deformed by 0.8 mm in the Y-axis direction.

Additionally, when the pressing member 800 applied a pressure of 101,047 N to the case 200 in the Y-axis direction, the pressed portion of the case 200 was deformed by 9.6 mm in the Y-axis direction. At this time, it can be seen that the reinforcing member 300 installed inside the case 200 was broken at the moment when the case 200 was deformed by 5.2 mm in the Y-axis direction.

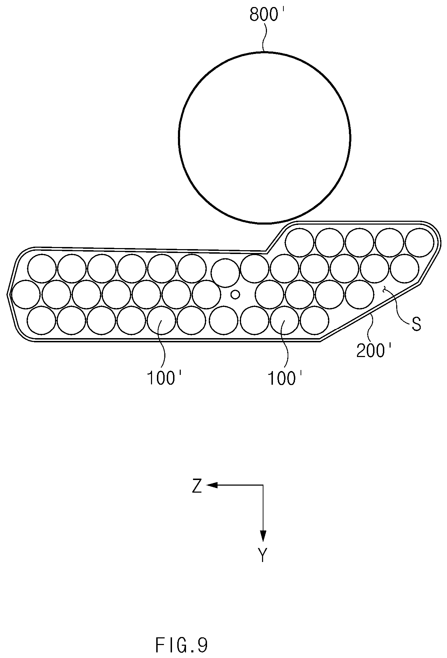

FIG. 9 is a view showing a state in which a pressing member 800' presses a battery pack 10' according to a comparative example of the present disclosure. The battery pack 10' according to a comparative example of the present disclosure differs from the battery pack 10 according to Embodiment 1 of the present disclosure in that the reinforcing member 300 is not installed inside a case 200'.

Specifically, a state in which the pressing member 800' configured as a rigid body presses the case 200' of the battery pack 10' is shown in FIG. 9. A plurality of battery cells 100' are accommodated inside the case 200', and the case 200' is made of a plastic material.

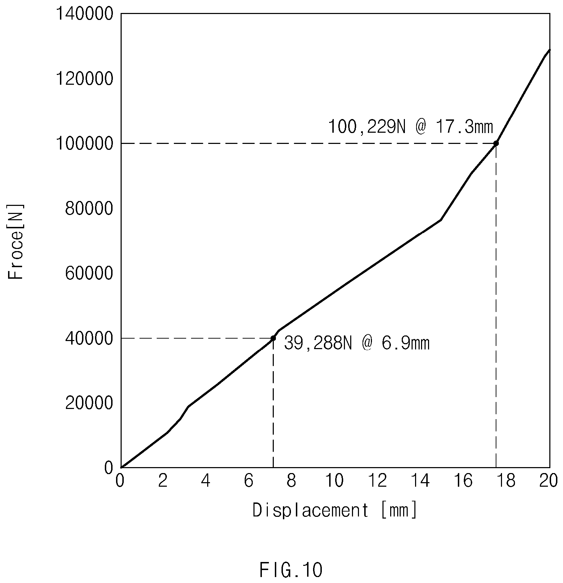

FIG. 10 is a graph showing the degree of deformation of a battery pack 10' according to the pressurization of FIG. 9, wherein the X-axis of FIG. 10 represents the degree of deformation of the case 200' of the battery pack 10', and the Y-axis of FIG. 10 represents the magnitude of pressure applied by the pressing member 800' to the case 200' of the battery pack 10'.

As a result of pressing the case 200' with the pressing member 800' configured as a rigid body, it can be seen that the degree of deformation of the case 200' increases as the pressure applied by the pressing member 800' to the case 200' increases. Specifically, when the pressing member 800' applied a pressure of 39,228 N to the case 200' in the Y-axis direction, the pressed portion of the case 200' was deformed by 6.9 mm in the Y-axis direction. Additionally, when the pressing member 800' applied a pressure of 100,229 N to the case 200' in the Y-axis direction, the pressed portion of the case 200' was deformed by 17.3 mm in the Y-axis direction.

Comparing Embodiment 1 of the present disclosure with the comparative example of the present disclosure, the battery pack 10 according to Embodiment 1 of the present disclosure was deformed by 0.8 mm under a pressure of 36,651 N (see FIG. 8), but the battery pack 10' according to the comparative example of the present disclosure was deformed by 6.9 mm under a pressure of 39,228 N (see FIG. 10). Additionally, the battery pack 10 according to Embodiment 1 of the present disclosure was deformed by 9.6 mm under a pressure of 101,047 N, but the battery pack 10' according to the comparative example of the present disclosure was deformed by 17.3 mm under a pressure of 100,229 N. That is, it can be seen that when an external pressure is applied, the battery pack 10 according to Embodiment 1 of the present disclosure is deformed significantly less than the battery pack 10' according to the comparative example of the present disclosure.

Meanwhile, the first to third reinforcing members 310, 320, 330 constituting the reinforcing member 300 may be made of a plastic material. Here, the first and second reinforcing members 310, 320 may be thermally fused to the case 200 made of a plastic material. In this case, the reinforcing member 300 is thermally fused to the case 200 as a single member, so that it may be firmly coupled to the inner surface of the case 200, and even when an external force is applied to the case 200, the reinforcing member 300 may be prevented from being dislodged from the case 200.

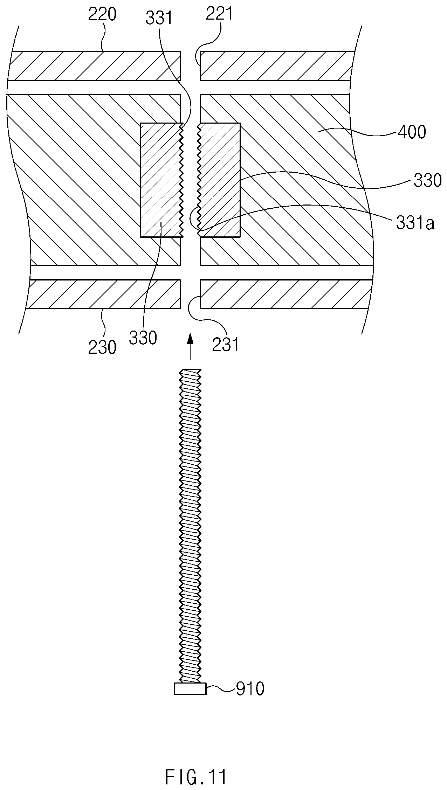

FIG. 11 is a cross-sectional view showing a state in which a fixing screw 910 is inserted into a reinforcing member 300. As shown in FIG. 11, a vertical through hole 331 is formed in the third reinforcing member 330 constituting the reinforcing member 300, and a vertical housing through hole may be formed in the cell fixing housing 400. Here, the housing through hole formed in the cell fixing housing 400 may face the through hole 331 of the third reinforcing member 330. Additionally, openings 221, 231 facing the through hole 331 of the third reinforcing member 330 may be formed in each of the upper plate 220 and the lower plate 230.

At this time, a screw thread 331a may be formed on the inner surface of the through hole 331 of the third reinforcing member 330. In this case, the fixing screw 910 may penetrate the lower plate 230, the cell fixing housing 400, and the upper plate 220 in a state of being screwed to the reinforcing member 300. The fixing screw 910 may be used as a fixing member for fixing the battery pack 10 to a device such as an E-bike, and thus there is an advantageous effect of firmly fixing the battery pack 10 to the device.

### Embodiment 2

The battery pack according to Embodiment 2 of the present disclosure differs from Embodiment 1 in that a plurality of reinforcing members are installed inside the case. Contents common to Embodiment 1 will be omitted as much as possible, and Embodiment 2 will be described focusing on the differences. That is, it is obvious that contents not described in Embodiment 2 may be regarded as contents of Embodiment 1 if necessary.

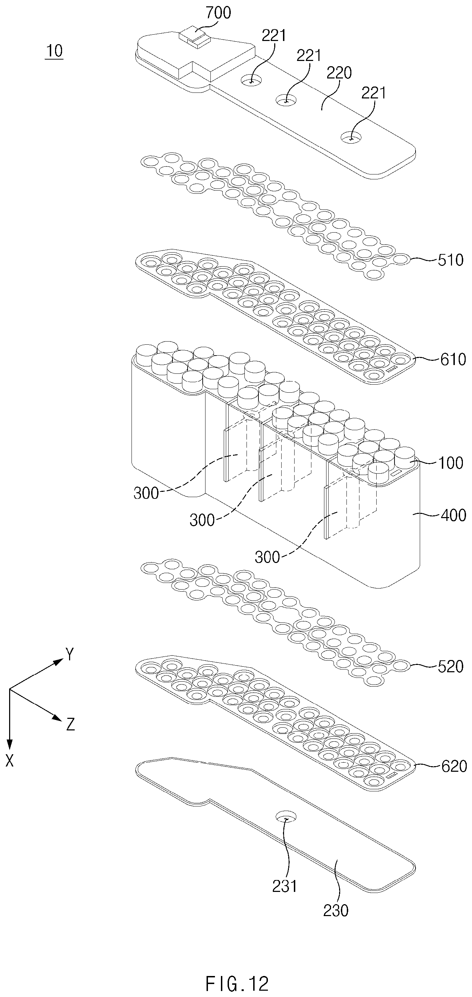

FIG. 12 is a view showing internal configurations of a battery pack 10 according to Embodiment 2 of the present disclosure. As shown in FIG. 12, in the battery pack 10 according to Embodiment 2 of the present disclosure, a plurality of reinforcing members 300 may be interposed between inner walls of the case 200.

Here, each of the reinforcing member 300 may include a first reinforcing member 310 contacting one inner wall of the case 200, a second reinforcing member 320 contacting the other inner wall of the case 200, and a third reinforcing member 330 connecting the first and second reinforcing members 310, 320 between the first and second reinforcing members 310, 320. The third reinforcing member 330 may be formed thicker than the first and second reinforcing members 310, 320.

The plurality of reinforcing members 300 interposed inside the case 200 are arranged along a length direction of the case 200, and each of the reinforcing members 300 may be interposed between inner walls of the case 200 in a width direction. In this case, the plurality of reinforcing members 300 are interposed between the inner walls of the case 200 to support the case 200 outwardly, which may effectively prevent the case 200 from being damaged by an external impact.

At this time, a through hole 331 may be formed in each of the plurality of reinforcing members 300. The through hole 331 may be formed in the third reinforcing member 330 having the thickest thickness among the reinforcing members 300. Here, the third reinforcing member 330 may have a cylindrical rod shape, and the through hole 331 may penetrate the third reinforcing member 330 along a central axis of the third reinforcing member 330.

Additionally, a plurality of openings 221, 231 may be formed in the case 200. Specifically, a plurality of upper openings 221 facing the through holes 331 may be formed in the upper plate 220. Additionally, a plurality of lower openings 231 facing the through holes 331 may be formed in the lower plate 230.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

| | | | |
|---|---|---|---|
| 10: | Battery pack | 100: | Battery cell |
| 200: | Case | 210: | Connection plate |
| 220: | Upper plate | 230: | Lower plate |
| 300: | Reinforcing member | 310: | First reinforcing member |
| 320: | Second reinforcing member | 330: | Third reinforcing member |
| 400: | Cell fixing housing | 410: | Cell seating hole |
| 500: | Busbar | 510: | First busbar |
| 520: | Second busbar | 600: | Cell frame |
| 610: | First cell frame | 620: | Second cell frame |
| 700: | Connector insertion portion | 800: | Pressing member |
| 900: | Fixing pin | 910: | Fixing screw |
| S: | Internal space | | |

## Claims

1. A battery pack comprising:
a plurality of battery cells;
a case forming an internal space in which the plurality of battery cells are accommodated; and
a reinforcing member interposed between inner walls of the case to prevent deformation of the case,
wherein the reinforcing member comprises:
a first reinforcing member contacting one inner wall of the case;
a second reinforcing member contacting the other inner wall of the case; and
a third reinforcing member formed thicker than the first and second reinforcing members and connecting the first and second reinforcing members between the first and second reinforcing members,
wherein the third reinforcing member has a rod shape extending in a length direction of the battery cell, and
the third reinforcing member comprises a through hole formed along a direction in which the third reinforcing member extends.

2. The battery pack according to claim 1,
wherein a pair of openings facing the through hole are formed in the case.

3. The battery pack according to claim 1,
wherein the first reinforcing member is a plate-shaped member provided between the third reinforcing member and one inner wall of the case in a width direction, and
the second reinforcing member is a plate-shaped member provided between the third reinforcing member and the other inner wall of the case in a width direction.

4. The battery pack according to claim 3,
wherein a thickness of the third reinforcing member is 4 to 5 mm, and
thicknesses of the first and second reinforcing members are 2.5 to 3.5 mm.

5. The battery pack according to claim 2,
wherein a diameter length of the through hole is the same as a diameter length of the opening.

6. The battery pack according to claim 1,
wherein a screw thread is formed on the inner surface of the through hole.

7. The battery pack according to claim 1,
wherein the case is made of a plastic material.

8. The battery pack according to claim 1,
wherein the first to third reinforcing members are made of a metal material.

9. The battery pack according to claim 7,
wherein the first to third reinforcing members are made of a plastic material.

10. The battery pack according to claim 9,
wherein the first and second reinforcing members are fused to the case.

11. A battery pack comprising:
a plurality of battery cells;
a case forming an internal space in which the plurality of battery cells are accommodated;
a reinforcing member interposed between inner walls of the case to prevent deformation of the case; and
a cell fixing housing installed in the internal space and fixing the plurality of battery cells,
wherein the reinforcing member comprises:
a first reinforcing member contacting one inner wall of the case;
a second reinforcing member contacting the other inner wall of the case; and
a third reinforcing member formed thicker than the first and second reinforcing members and connecting the first and second reinforcing members between the first and second reinforcing members.

12. The battery pack according to claim 11,
wherein a cell seating hole in which the battery cell is seated is formed in the cell fixing housing.

13. The battery pack according to claim 11,
wherein the reinforcing member is interposed between inner walls of the case in a state of being inserted into the cell fixing housing.

14. The battery pack according to claim 1,
wherein a plurality of the reinforcing members are interposed between inner walls of the case.
